# EUROPEAN PATENT APPLICATION

(11) **EP 1 083 457 A1**
(43) Date of publication of application: **14.03.2001**
(21) Application number: 99402206.9
(22) Date of filing: 07.09.1999
(51) Int. Cl.: G02F 1/1333

(54) **Liquid crystal matrix add/drop system**

(71) Applicant: CORNING INCORPORATED, Corning, N.Y. 14831 (US)
(72) Inventor: Nicolas, Christophe, 94270 Le Kremlin, Bicetre (FR)
(74) Representative: Boon, Graham Anthony

(57) **Abstract**

A WDM cross-connect is disclosed which selectively extracts one or several channels from a fiber optic network and directs them into a selected fiber. The cross-connect also has add/drop channel capabilities. The cross-connect of the present invention has a unique method of operation. A liquid crystal switch element is cross-illuminated by the orthogonal component and the parallel component of the light signal and directs all of the channel signal into a selected port. In another embodiment the liquid crystal element forms an N x M matrix which provides multiple switching layers to accommodate traffic from several networks simultaneously.

## Description

### BACKGROUND OF THE INVENTION

### 1. Field of the Invention

The present invention relates generally to add/drop optical switches, and particularly to add/drop switches and cross-connects using liquid crystal modulators as switching elements.

### 2. Technical Background

First generation optical networks were employed to provide point to point service carrying high bandwidth signals over long distances. Subsequently, fiber optic facilities were introduced into the feeder routes of the local loop to replace copper cable and provide higher quality telephone service. At the same time, service providers experienced an increased demand for data transmission services. SONET and SDH systems were introduced to cope with the demand for both voice and data services. These systems employ time division multiplexing (TDM) technology to multiplex and demultiplex high speed data streams carrying both voice and data traffic. Multiplexed data is converted from the electrical domain to the optical domain and transmitted optically. This conversion is employed at each node in the network. Conversely, incoming traffic must be converted from the optical domain into electrical signals. Unfortunately, traffic that is passing through the node must also be converted into electrical signals, multiplexed with outgoing traffic from the node, and reconverted into an optical signal. The optical signals are limited by the electrical domain equipment which has a bandwidth limit of about 10Gb/s. As the demand for bandwidth increases, this scheme is becoming impractical.

One way of increasing transmission capacity is to use wavelength division multiplexing (WDM). WDM increases capacity by carrying multiple channels at different wavelengths. WDM systems having a transmission capacity of over 2 Tb/s have been demonstrated. At higher data rates it is more efficient and cost-effective to perform switching and routing functions in the optical domain. By eliminating the use of electrical domain equipment for a significant portion of the network traffic, the costs associated with that equipment is eliminated as well. In turn, the reliability of the network is increased, because fewer electrical domain systems are needed. In addition, by performing switching and routing functions at the optical layer, fewer demands are placed on the underlying electrical domain equipment. Traffic that is merely passing through a node will not have to be processed electrically since it will be routed optically. Reliability will be improved in another way because wavelength selective cross-connection devices provide rerouting capabilities at the wavelength level that are faster than those presently used for electrical domain systems.

In one approach that has been considered, an optical signal from an input fiber is directed to a diffraction grating to separate the signal into its constituent wavelength channels. Each channel traverses a polarizer before reaching the liquid crystal cell. A second polarizer, oriented 90° with respect to the first polarizer, is disposed on the other side of the liquid crystal switch. When the LC cell is not activated, it rotates the channel by 90°, and the second polarizer transmits the signal. When the LC cell is activated, the channel is not rotated and the second polarizer does not transmit the channel. If a non-polarized signal is passed through the polarizer it will only transmit half of the signal. Thus, a 50% transmission factor penalty is incurred when using this design. In addition, a channel interrupted by the LC cell is lost and cannot be used. Thus, this system cannot be used in an add/drop system.

In another approach that has been considered, a Wollaston prism and half-wave plate convert the light into a single polarization state to compensate for the 50% transmission factor penalty. The Wollaston prism is a polarization dispersing element that steers the light exiting the LC cell based on its polarization state. This approach also has a disadvantage. The size of the optical beam exiting the LC cell is doubled because of the spatial splitting by the prism. There is also an inherent asymmetry due to the birefringence of the Wollaston prism that causes different focal points and increases insertion loss ripple.

Thus, a need exists for an add/drop optical switch having wavelength selective cross-connect capabilities that eliminates the 50% transmission factor penalty and the service interruptions that characterize previous approaches. A device is needed which eliminates the Wollaston prism and the deficiencies associated with it.

### SUMMARY OF THE INVENTION

The present invention addresses the problems discussed above. The WDM cross-connect of the present invention selectively extracts one or several channels from a fiber optic network and directs them into a selected fiber. The present invention has channel add/drop capabilities. Supplementary channels are added and directed into a selected fiber. Input channels are extracted and directed into a drop port as directed by the network. Switching is performed by a liquid crystal element that is cross-illuminated by an orthogonal component and a parallel component of the light signal. The 50% transmission factor penalty is thereby eliminated. In another embodiment, the liquid crystal element forms an N x M matrix that accommodates traffic from several fiber optic networks.

One aspect of the present invention is an optical device for directing a randomly polarized light signal into a selected port. The randomly polarized light signal includes a parallel component and an orthogonal component. The optical device includes a liquid crystal element having a switch state, a first side and a second side. The liquid crystal element is cross-illuminated by the parallel component incident on the first side and the orthogonal component incident on the second side, and the liquid crystal element produces a first side output and a second side output in accordance with the switch state. The optical device further includes a signal management system connected to the liquid crystal element. The signal management system uses the first side output and the second side output to direct substantially 100% of the randomly polarized signal into the selected port in accordance with the switch state.

In another aspect, the present invention includes a method for directing a randomly polarized light signal into a selected port of an optical device. The randomly polarized light signal includes a parallel component and an orthogonal component. The optical device includes a liquid crystal element having a switch state, a first side and a second side. The method includes the steps of providing a signal management system connected to the liquid crystal element and the selected port, and cross-illuminating the liquid crystal element with the parallel component incident on the first side and the orthogonal component incident on the second side. The liquid crystal element produces a first side output and a second side output in accordance with the switch state. The method further includes providing the signal management system with the first side output and the second side output, wherein the signal management system directs substantially all of the randomly polarized signal into the selected port in accordance with the switch state.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operation of the invention.

### BRIEF DESCRIPTION OF THE DRAWINGS

Figure 1 is a schematic view of a liquid crystal switch according to a first embodiment of the present invention;
Figure 2 is a schematic view of a liquid crystal switch according to the first embodiment of the present invention depicting operation of the drop port;
Figure 3 is a schematic view of a liquid crystal switch according to the first embodiment of the present invention depicting operation of the add port;
Figure 4 is a schematic view of a liquid crystal switch according to the first embodiment of the present invention showing the symmetrical operating capabilities of the switch;
Figure 5 is a schematic view of a liquid crystal switch according to a second embodiment of the present invention;
Figure 6 is a schematic view of a liquid crystal switch according to the second embodiment of the present invention wherein the switching cell is not activated;
Figure 7 is a schematic view of a liquid crystal add/drop switch according to the second embodiment of the present invention showing the arrangement of ports on the PBS;
Figure 8 is a detail view of an N x M liquid crystal matrix in accordance with a third embodiment of the present invention;
Figure 9 is a detail view of a polarization beam splitter in accordance with the third embodiment of the present invention;
Figure 10 is a schematic view of a WSXC using the polarization beam splitter shown in Figure 9 and the N x M liquid crystal matrix shown in Figure 8;
Figure 11A is a schematic view depicting the flow of a signal when the liquid crystal cell is activated according to the third embodiment of the present invention; and
Figure 11B is a schematic view depicting the flow of a second add signal having the same wavelength as the signal shown in Figure 11A.

### DETAILED DESCRIPTION OF THE PREFERRED EMBODIMENTS

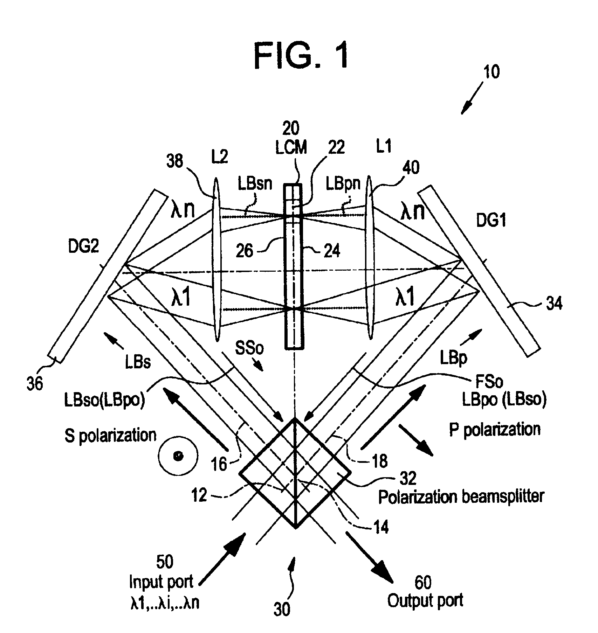

Reference will now be made in detail to the present preferred embodiments of the invention, an examples of which are illustrated in the accompanying drawings. Wherever possible, the same reference numbers will be used throughout the drawings to refer to the same or like parts. An exemplary embodiment of the liquid crystal switch of the present invention is shown in Figure 1, and is designated generally throughout by reference numeral 10.

In accordance with the invention, the present invention for a liquid crystal switch 10 includes liquid crystal element 20 which is the cross-illuminated by an orthogonal component of the light signal and a parallel component of the light signal. The 50% transmission factor penalty is thereby eliminated. One or several input channels may be extracted from a fiber optic network and directed into a selected port based on a switch state of liquid crystal element 20. Extracted input channels can also be directed into a drop port in accordance with the switch state. Supplementary channels are added and interleaved with the network input channels and directed into the selected fiber as desired. In one embodiment, liquid crystal element 20 forms an N x M matrix supporting creating multiple switching layers to support several fiber optic networks.

As embodied herein, and depicted in Figure 1, a schematic view of liquid crystal switch 10 according to a first embodiment of the present invention is disclosed. Liquid crystal switch 10 includes liquid crystal element 20 and signal management system 30.

In general, liquid crystal element 20 has first side 24 and second side 26, and is characterized by a switch state. Liquid crystal element 20 is cross-illuminated by the parallel component of the input light signal LBp and the orthogonal component of the input light signal LBs. LBp is incident on first side 24 and orthogonal component LBs is incident on second side 26. LBp and LBs pass each other inside liquid crystal element 20 and exit the other side producing a first side output and a second side output. The polarization state of the first side output and the second side output is determined by the switch state.

It will be apparent to those of ordinary skill in the pertinent art that modifications and variations can be made to liquid crystal element 20 of the present invention depending on the number of signal channels and the desired switching speed of switch 10. Thus, liquid crystal element 20 may be a twisted nematic liquid crystal modulator, a ferroelectric liquid crystal modulator, or any other suitable light modulating device. Further, liquid crystal element 20 maybe configured to switch a single channel, as discussed above, or multiple signal channels, as will be discussed below. In Figure 1, liquid crystal element 20 consists of a plurality of individually controllable switching cells 22. The parallel and orthogonal signal components, LBp and LBs, may include a plurality of wavelengths λl through λn, wherein each wavelength corresponds to a signal channel. As depicted in Figure 1, switching cell 22 is cross-illuminated by parallel channel component LBpn and orthogonal channel component LBsn of wavelength channel λn. Each switching cell 22 is in either an active switch state or an inactive switch state based on network control.

As depicted in Figure 1, signal management system 30 includes splitter-combiner 32 which is optically coupled to first multiplexer 34 and second multiplexer 36. Splitter-combiner 32 is connected to input port 50 to thereby receive a randomly polarized light signal from the network. Splitter-combiner 32 is likewise connected to output port 60. Thus, any input channel λ1, λ2, ...λn can be directed into output port 60 by switch 10. First multiplexer 34 is coupled to first side 24 by way of lens system 40. Second multiplexer 36 is coupled to second side 26 by way of lens system 38. An advantage to this approach is the elimination of the asymmetry and different focal points produced by the birefringence of the Wollaston prisms. In addition, signal management system 30 readily accommodates randomly polarized light signals without incurring a 50% transmission loss as prior approaches have.

Splitter combiner 32 may be of any suitable well known type, but there is shown by way of example a polarization beam splitter (PBS) 32 that divides a randomly polarized light signal into parallel component LBp and orthogonal component LBs.

First multiplexer 34 may be of any suitable well-known type, but there is shown by way of example first diffraction grating 34 which demultiplexes LBp into parallel channel components LBp1-LBpn. Lens system 40 focuses each of the parallel channel components LBp1-LBPn onto the first side of its respective switching cell 22. Second multiplexer 36 may be of any suitable well-known type, but there is shown by way of example second diffraction grating 36 which de-multiplexes LBs into orthogonal channel components LBs1-LBsn. Lens system 38 focuses each of the orthogonal channel components LBs1-LBsn onto its respective switching cell 22.

Switch 10 operates as follows. A randomly polarized light signal consisting of channels λ1, λ2, ...λn is directed into input port 50 from the network. The light signal enters PBS 32 along optical axis 12. PBS 32 splits the light signal by allowing parallel component LBp to pass and propagate along first path 18. However, PBS 32 reflects orthogonal component LBs which propagates along second path 16. First grating 34 demultiplexes LBp into parallel channel components LBp1 - LBpn and directs them through lens system 40 toward their respective switching cells on first side 24. Second grating 36 demultiplexes LBs into orthogonal channel components LBs1 - LBsn and directs them through lens system 38 toward their respective switching cells 22 on second side 26. Thus, the i^{th} switching cell 22 is cross-illuminated by an LBpi component and an LBsi component, which pass each other in cell 22.

When switching cell 22 is not activated, the polarization direction of LBpi is subjected to a 90° rotation and exits as a second side channel output having an orthogonal polarization (LBso). Likewise, the polarization direction of LBsi is rotated 90° and exits as a first side channel output having a parallel polarization (LBpo).

When cell 22 is activated, the 90° alignment of the liquid crystal molecules in cell 22 is disrupted and neither the LBpi component nor the LBsi component are rotated. Thus, LBpi passes through cell 22 and exits second side 26 with a parallel polarization, as a LBpo. LBsi passes through cell 22 and exits first side 24 with an orthogonal polarization, as a LBso. Since each cell 22 of liquid crystal element 20 is individually controllable, each channel λ1...λn can be switched by either rotating polarization or not rotating polarization.

The first side channel outputs are multiplexed by grating 34 to form a first side output beam (FSo). Similarly, second grating 36 multiplexes the second side channel outputs into a second side output beam (SSo). FSo and SSo are recombined by PBS 32 to thereby direct each channel into its selected port.

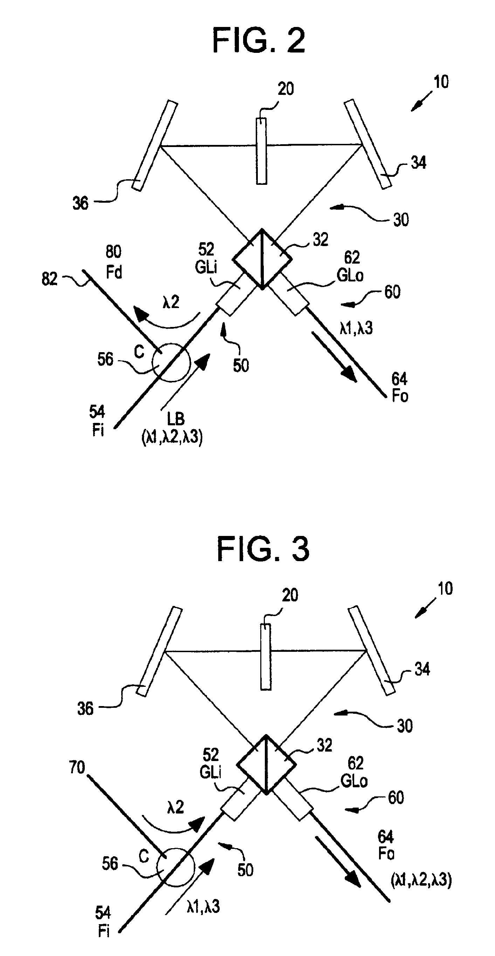

PBS 32 directs each channel into its selected port based on which path, 16 or 18, LBpo and LBso propagate along. When cell 22 is active, LBpo propagates along path 16 and LBso propagates along path 18. In this case, LBpo is passed through PBS 32 into output port 60 and LBso is reflected into output port 60. Thus, LBpo and LBso are recombined into channel λi and directed into output port 60. If cell 22 is inactive, LBpo propagates along path 18 and LBso propagates along path 16. LBpo passes through PBS 32 and is directed into input port 50. LBso is reflected by PBS 32 into input port 50. Thus, LBpo and LBso are recombined into channel λi and directed into input port 50. Thus, a channel may be dropped when it is directed out of switch 10 by transmitting it back out input port 50. This arrangement will be discussed in relation to Figure 2.

As embodied herein and depicted in Figure 2, a schematic view of a liquid crystal switch 10 showing the configuration of the drop port according to the first embodiment of the present invention is disclosed. Input port 50 and output port 60 are connected to PBS 32 using collimators 52 and 62, respectively. Collimator 52 collimates randomly polarized light beam LB and directs it into PBS 32. Input fiber 54 is connected to collimator 52 via circulator 56. Circulator 56 is connected to drop port 80, which is in turn, connected to output fiber 82.

In Figure 2, LB includes three channels, λ1, λ2, and λ3. As illustrated, channels λ1 and λ3 are in the active switch state and channel λ2 is in the inactive switch state. Thus, channel λ2 is dropped and is directed by PBS 32 out of the switch via input port 50. As channel λ2 propagates along fiber 54 in a direction opposite to input signal LB, circulator 56 functions to re-direct channel λ2 into fiber 82. Channels λ1 and λ3, on the other hand, are directed into collimator 62 of output port 60 and propagate in fiber 64.

As embodied herein and depicted in Figure 3, the operation of an add port according to the first embodiment of the present invention is disclosed. The only difference between Figure 2 and Figure 3 is that the direction of channel λ2 is reversed. Channels λ1 and λ3 are included in randomly polarized light signal LB, and channel λ2 is being added via add port 70. In this instance, channel λ2 is interleaved with channels λ1 and λ3 by circulator 56. As illustrated, the switching cells 22 for all channels are in an active state. As a result, all channels λ1, λ2 and λ3 are directed into output port 60.

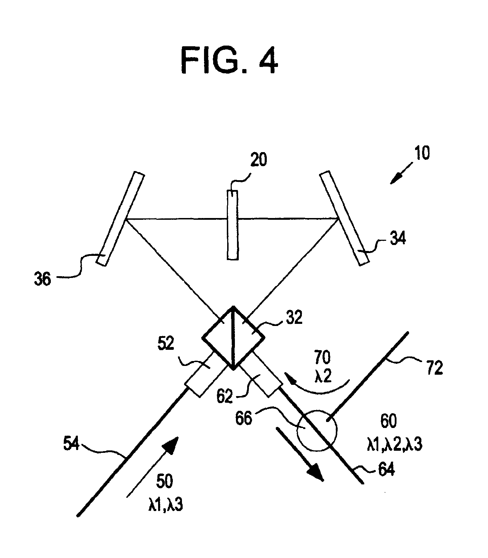

As embodied herein and depicted in Figure 4, the symmetrical operating capabilities of switch 10 are illustrated. For example, add port 70 is connected to the output port 60 of switch 10, instead of being connected to input port 50, as depicted in Figure 3. Channel λ2 is directed from fiber 72 into circulator 66. It is then directed into PBS 32 by collimator 62. Channel λ2 is interleaved with channels λ1 and λ3 by PBS 32. Since each switching cell 22 for channels λ1, λ2 and λ3 is in an active state, all channels λ1, λ2 and λ3 are directed into output port 60. Thus, the positioning of add port 70 or drop port 80 with respect to PBS 32 is largely irrelevant due to the symmetrical properties of PBS 32.

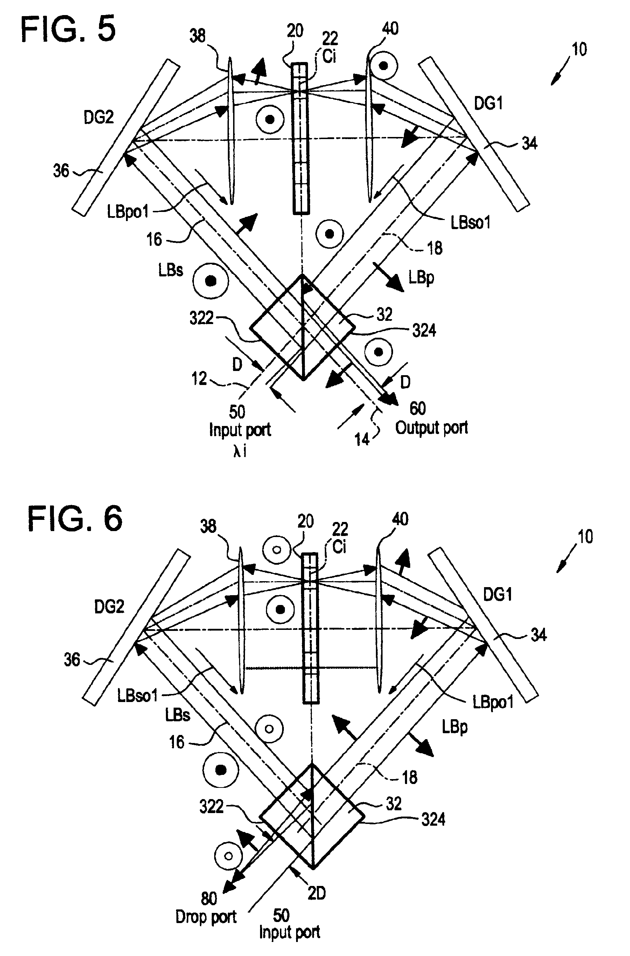

As embodied herein and depicted in Figure 5, schematic views of a liquid crystal switch according to a second embodiment of the present invention is disclosed. Figure 5 illustrates the operation of the second embodiment when cell 22 is in an active switch state. In this embodiment, input port 50 is disposed a distance "D" from center axis 12 of facet 322. Output port 60 is also disposed a distance D from center axis 14 of facet 324. By offsetting input port 50 and output port 60 from their respective axes, the circulators from the previous embodiments can be eliminated.

As depicted in Figure 5, channel λ1 is divided into LBp1 and LBs1 by PBS 32. Signal management system cross-illuminates cell 22 and LBpo1 propagates along path 16 and LBso1 propagates along path 18. Note that LBp01 and LBs01 are offset a distance D from path 16 and 18, respectively. LBpo passes through PBS 32 into output port 60 and LBso is reflected into output port 60. Thus, LBpo1 and LBso1 are recombined, as channel λ1 is directed into output port 60.

As embodied herein and depicted in Figure 6, the second embodiment of the present invention shows cell 22 in an inactive state. Channel λ1 is divided into LBp1 and LBs1 by PBS 32. Signal management system cross-illuminates cell 22 and LBpo1 propagates along path 18 and LBso1 propagates along path 16. Note that LBpo1 and LBso1 are offset a distance D from path 18 and 16, respectively. LBpo passes through PBS 32 into drop port 80 and LBso is reflected into drop port 80. Again, LBpo1 and LBso1 are recombined, and channel λ1 is directed into drop port 80.

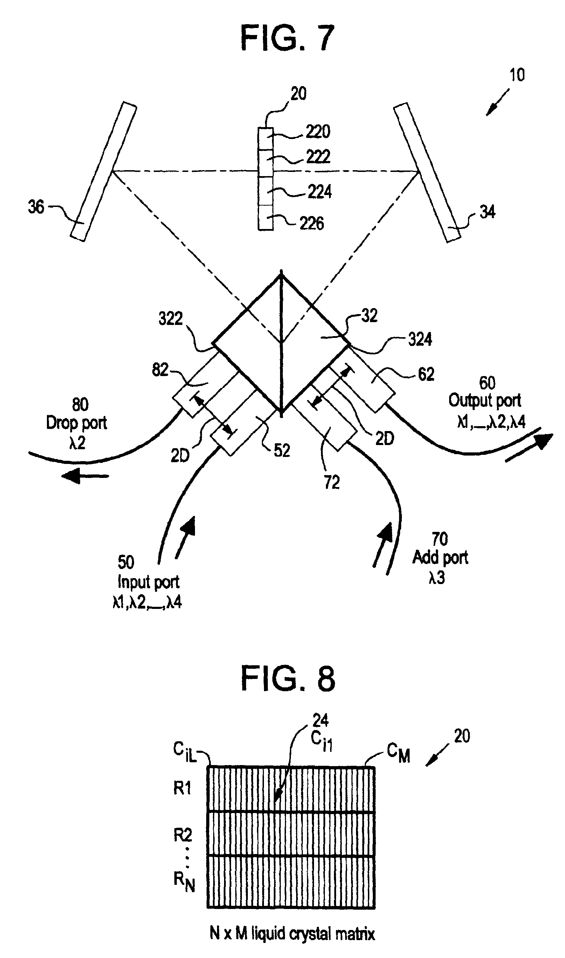

As embodied herein and depicted in Figure 7, the arrangement of the various ports on PBS 32 is shown according to the second embodiment of the present invention is disclosed. Input port 50 includes collimator 52 which is connected to PBS 32 at facet 322. Output port 60 includes collimator 62 which is connected to PBS 32 at facet 324. Add port 70 is separated from output port 60 by a distance 2D. Add port 70 includes collimator 72 which is connected to PBS 32 at facet 324. Drop port 80 is separated from input port 50 by a distance 2D and includes collimator 82 which is connected to PBS 32 at facet 322.

In the example shown in Figure 7, channels λ1, λ2, and λ4 are directed into switch 10 via input port 50. Channel λ3 is directed into switch 10 via add port 70. Cells 220, 224, and 226 correspond to channels λ1, λ3, and λ4, respectively. Cells 220, 224, and 226 are in an active switch state. Cell 222 corresponds to channel λ2 and is in an inactive state. With the exception of the offset used to separate inport port 50 from drop port 80, and output port 60 from add port 70, switch 10 operates as described above with respect to the first embodiment. Thus, channels λ1, λ3, and λ4 are directed into output port 60 and channel λ2 is directed into drop port 80.

As embodied herein and depicted in Figure 8, a detail view of an N x M liquid crystal matrix in accordance with a third embodiment of the present invention is disclosed. It will be apparent to those of ordinary skill in the pertinent art that modifications and variations can be made to matrix 20 of the present invention depending on the number of fibers in the network and the number of channels carried by each fiber. For example, each row of matrix 20 is a switching layer corresponding to a fiber network. Each column corresponds to a channel wavelength supported by the network. Thus, matrix 20 supports N x M channels.

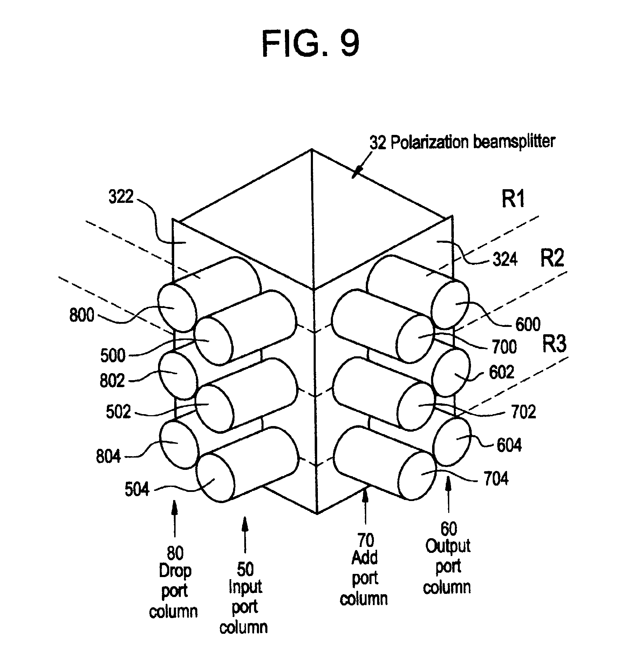

As embodied herein and depicted in Figure 9, a detail view of polarization beam splitter in accordance with the third embodiment of the present invention is disclosed. Although certain mechanical details are altered to accommodate matrix 20 depicted in Figure 8, one of ordinary skill in the art will recognize that PBS 32 and diffraction grating pair 34 and 36 used in the first two embodiments are used in the third embodiment. While PBS is identical, additional collimators are added to facets 322 and 324 to accommodate fibers from the various networks. In this example, N equals three. Input port 50 is replaced by a column of input ports 500, 502, and 504. In like manner, there are three drop ports (800, 802, 804), three output ports (600, 602, 604), and three add ports (700, 702, and 704). Thus, ports 500, 600, 700, and 800 are the input port, output port, add port, and drop port, respectively, for a first network switched by Row R1, as depicted in Figure 8. Thus, the third embodiment of the present invention has N-layers to support N-fiber networks.

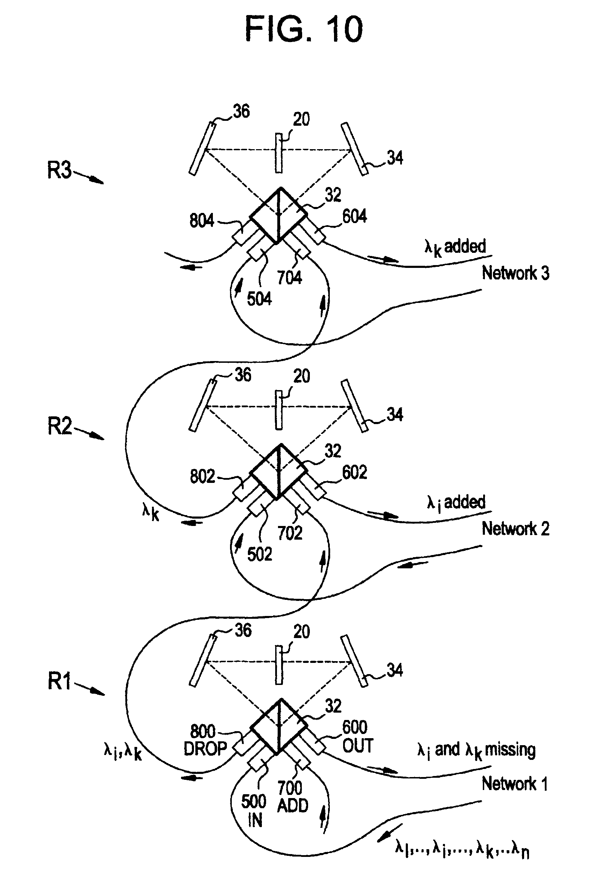

As embodied herein and depicted in Figure 10, a wavelength selective cross-connect (WSXC) 10 in accordance with the third embodiment of the present invention is disclosed. WSXC 10 includes the polarization beam splitter shown in Figure 9 and the N x M liquid crystal matrix 20 shown in Figure 8. The schematic shown in Figure 10 separates each layer R1-R3 into individual views for clarity of illustration to more conveniently show the interconnections between the layers R1-R3. WSXC may interchange wavelengths between networks by interconnecting them as shown. Drop port 800 of R1 is connected to add port 702 of R2. Drop port 802 of R2 is connected to add port 704 of R3. One of ordinary skill in the art will recognize that other variations and permutations can be included to obtain complete wavelength interchangeability between layers R1, R2 and R3. Signal management system 30 and the interconnections between layers R1, R2, and R3 form an optical router for cross-connecting any one of the M signal channels from any one of the N randomly polarized light signals to any one of the individually controllable switching cells.

As illustrated in Figure 10, a random light signal having wavelengths λ1,..λi,..λk,..λn is directed into in port 500. Layer R1 operates to drop wavelengths λi and λk. Thus, λi and λk do not appear at out port 600. Instead, λi and λk are directed out of drop port 800 and are directed into add port 702 of layer R2. Layer R2 drops λk and thereby passes it on to the next layer R3 via add port 704. On the other hand, λi is directed out of out port 602 and thereby added to the output signal of layer R2. Finally, λk is directed into out port 604 of layer R3.

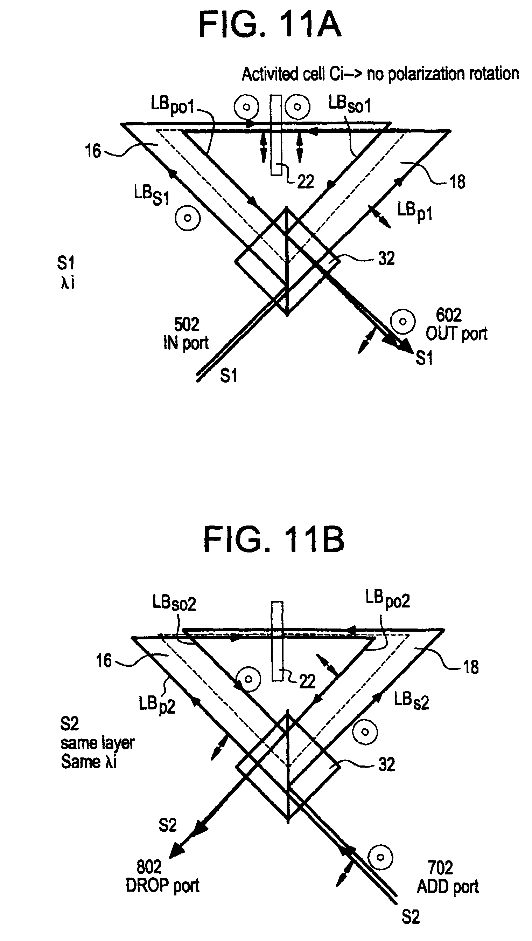

As embodied herein and depicted in Figures 11A and 11B, the absence of wavelength contention in the WSXC 10 shown in Figure 10 is illustrated. Signal S1 having a wavelength λi is directed into in port 502. As discussed above, S1 is separated into orthogonal component LBs1 and parallel component LBp1 which cross-illuminate cell 22. LBs1 propagates along path 16. LBp1 propagates along path 18. Cell 22 is activate and thus, no polarization rotation is effected. LBp1 passes through cell 22 and becomes LBpo1. LBs1 passes through cell 22 and becomes LBso1. LBpo1 and LBso1 are combined by PBS 32 and directed into out port 602. In Figure 11B, a second signal S2 having wavelength λi is directed into add port 702. S2 is separated into orthogonal component LBs2 and parallel component LBp2 which cross-illuminate cell 22. LBs2 propagates along path 18. LBp2 propagates along path 16. Cell 22 is activate and thus, no polarization rotation is effected. LBp2 passes through cell 22 and becomes Lbpo2. LBs2 passes through cell 22 and becomes Lbso2. Lbpo2 and Lbso2 are combined by PBS 32 and directed into drop port 602. In this illustration, the network control is using layer R2 to relay S2 from layer R1 to layer R3. One of ordinary skill in the art will recognize that if cell 22 is inactive, polarization rotation will occur and S1 will be dropped and S2 will be directed into out port 602. Thus, the WSXC 10 of the present invention eliminates the problem of wavelength contention.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.

## Claims

1. An optical device for directing a randomly polarized light signal into a selected port, said randomly polarized light signal including a parallel component and an orthogonal component, said optical device comprising:
a liquid crystal element having a switch state, a first side and a second side, said liquid crystal element being cross-illuminated by the parallel component incident on said first side and the orthogonal component incident on said second side, wherein said liquid crystal element produces a first side output and a second side output in accordance with said switch state; and
a signal management system connected to said liquid crystal element, said signal management system uses said first side output and said second side output to direct substantially 100% of the randomly polarized signal into the selected port in accordance with said switch state.

2. The optical device of claim 1, wherein the liquid crystal element is a twisted nematic liquid crystal modulator.

3. The optical device of claim 1, wherein the liquid crystal element is a ferroelectric liquid crystal modulator.

4. The optical device of claim 1, wherein the randomly polarized light signal includes a plurality of a wavelengths, wherein each of said plurality of wavelengths defines a channel having a parallel channel component and an orthogonal channel component.

5. The optical device of claim 4, wherein the liquid crystal element further comprises a plurality of switching cells, each switching cell of said plurality of switching cells corresponds to one channel, wherein said switching cell is individually controllable and modulates the channel in accordance with a cell switch state.

6. The optical device of claim 5, wherein the switching cell is cross-illuminated by the parallel channel component on a first cell side and by the orthogonal channel component on a second cell side to thereby produce a first side channel output and a second side channel output in accordance with the cell switch state.

7. The optical device of claim 6, wherein the first side channel output is polarized in the orthogonal direction and the second side channel output is polarized in the parallel direction when the switching cell is in an active cell switch state.

8. The optical device of claim 6, wherein the first side channel output is polarized in the parallel direction and the second side channel output is polarized in the orthogonal direction when the switching cell is in an inactive cell switch state.

9. The optical device of claim 6, the signal management system further comprising:
an input port for receiving the randomly polarized light signal;
a splitter-combiner connected to said input port, wherein said splitter-combiner splits the randomly polarized light signal received by said input port into the parallel component and the orthogonal component;
a first multiplexer coupled to said splitter-combiner and the first side, wherein said first multiplexer separates the parallel component into the parallel channel components; and
a second multiplexer coupled to said splitter-combiner and the second side, wherein said second multiplexer separates the orthogonal component into the orthogonal channel components.

10. The optical device of claim 9, wherein the first multiplexer multiplexes the first side channel outputs into a first side output and the second multiplexer multiplexes the second side channel outputs into a second side output.

11. The optical device of claim 10, wherein the splitter-combiner combines the first side output with the second side output to thereby reform each channel, wherein the splitter-combiner directs the channel into the selected port in accordance with the cell switching state.

12. The optical device of claim 9, wherein the first multiplexer is a grating and the second multiplexer is a grating.

13. The optical device of claim 12, wherein the first multiplexer and the second multiplexer accommodate 32 channels.

14. The optical device of claim 9, wherein the splitter-combiner is a polarization beam splitter.

15. The optical device of claim 14, wherein the selected port includes an output port and a drop port.

16. The optical device of claim 15, wherein the polarization beam splitter further comprises:
a first facet connected to the input port, said first facet having a first optical axis, wherein the input port is offset from said first axis by a distance D; and
a second facet connected to the output port, said second facet having a second optical axis, wherein the output port is offset from said second axis by said distance D.

17. The optical device of claim 16, wherein the drop port is connected to the first facet such that said drop port is separated from the first optical axis by the distance D and separated from the input port by a distance 2D.

18. The optical device of claim 17, further comprising an add port connected to the second facet such that said add port is separated from the second optical axis by the distance D and from the output port by a distance 2D.

19. The optical device of claim 18, wherein the drop port is optically connected to the input port when the channel is dropped.

20. The optical device of claim 18, wherein the output port is connected to the add port when the channel is being added.

21. The optical device of claim 1, wherein the liquid crystal element is an N x M matrix having N rows and M columns of individually controllable switching cells for switching N x M signal channels in accordance with a cell switch state, wherein each channel is defined by a wavelength and N and M are integers.

22. The optical device of claim 21, wherein the signal management system further comprises:
N input ports for receiving N randomly polarized light signals, wherein each of said N input ports corresponds to one of the N rows;
a polarization beam splitter connected to said N input ports, for splitting the N randomly polarized light signals into N parallel components and N orthogonal components;
a first multiplexer coupled to said polarization beam splitter and the first side, said first multiplexer separates each parallel component of said N parallel components into M parallel channel components such that N x M parallel channel components are provided to the first side; and
a second multiplexer coupled to said polarization beam splitter on the second side, said second multiplexer separates each orthogonal component of said N orthogonal components into M orthogonal channel components such that N x M orthogonal channel components are provided to the second side.

23. The optical device of claim 22, wherein the first multiplexer and the second multiplexer are gratings.

24. The optical device of claim 22, wherein the polarization beam splitter further comprises:
N output ports for directing the output signal channels of each of the N rows into one of a corresponding N output waveguides;
N drop ports for directing the drop channels of each of the N rows into one of a corresponding N drop waveguides; and
N add ports corresponding to one of the N rows, wherein each add port of said N add ports directs add signal channels into the optical device.

25. A wavelength selective cross-connect apparatus comprising:
the optical device of claim 21;
N input ports for directing N light signals into the optical device of claim 21, wherein each of said N light signals accommodates up to M signal channels such that up to N x M signal channels corresponding to the N x M switching cells of the liquid crystal matrix are directed into the apparatus; and
an optical router for cross-connecting any one of said M signal channels from any one of said N randomly polarized light signals to any one of the individually controllable switching cells.

26. The apparatus of claim 25, wherein the optical router further comprises:
N drop ports optically coupled to the N rows such that each of said N drop ports corresponds to one of the N rows to thereby direct up to M drop channels from said one of the N rows; and
N add ports optically coupled to the N rows such that each of said N add ports corresponds to one of the N rows to thereby direct up to M add channels to said one of the N rows, wherein up to N-1 of said N drop ports are coupled to N-1 of said N add ports to thereby route up to M drop channels from a J^{th} row to an J+1 row, wherein J is an integer less than N.

27. A method for directing a randomly polarized light signal into a selected port of an optical device, said randomly polarized light signal including a parallel component and an orthogonal component, said optical device including a liquid crystal element having a switch state, a first side and a second side, said method comprising the steps of:
providing a signal management system connected to said liquid crystal element and the selected port;
cross-illuminating the liquid crystal element with the parallel component incident on the first side and the orthogonal component incident on the second side, wherein the liquid crystal element produces a first side output and a second side output in accordance with said switch state; and
providing said signal management system with said first side output and said second side output, wherein said signal management system directs substantially all of the randomly polarized signal into the selected port in accordance with said switch state.

28. The method of claim 27, wherein the randomly polarized light signal includes a plurality of a wavelengths, wherein each of said plurality of wavelengths defines a channel having a parallel channel component and an orthogonal channel component.

29. The method of claim 28, wherein the liquid crystal element further comprises a plurality of switching cells, each switching cell of said plurality of switching cells corresponds to one channel, wherein said switching cell is individually controllable and modulates the channel in accordance with a cell switch state.

30. The method of claim 29, wherein the step of cross-illuminating the liquid crystal element includes cross-illuminating the switching cell the parallel channel component on a first cell side and by the orthogonal channel component on a second cell side to thereby produce a first side channel output and a second side channel output in accordance with the cell switch state.

31. The method of claim 30, further comprising the step of polarizing the first side channel output the orthogonal direction and polarizing the second side channel output in the parallel direction when the switching cell is in an active cell switch state.

32. The method of claim 31, further comprising the step of polarizing the first side channel output in the parallel direction and polarizing the second side channel output in the orthogonal direction when the switching cell is in an inactive cell switch state.
